# EUROPÄISCHE PATENTSCHRIFT

(11) **EP 4 344 926 B1**
(45) Veröffentlichungstag und Bekanntmachung des Hinweises auf die Patenterteilung: **18.06.2025**
(21) Anmeldenummer: 23195640.0
(22) Anmeldetag: 06.09.2023
(51) Int. Cl.: B60L 1/00, E02F 3/58, B60K 7/00, B60L 3/00, B60L 3/04, B66C 13/12, B66C 13/18, B66C 21/00, B66C 23/00, B66C 25/00, E02F 3/00, E02F 9/08, B60K 17/00, B60L 50/50, B62D 63/02, E02F 9/20, H01R 13/639, H01R 13/64, H01R 13/703, B62D 55/06

(54) **ARBEITSMASCHINE MIT ELEKTRISCHEM FAHRANTRIEB**
ELECTRIC TRACTION DRIVE WORKING MACHINE
MACHINE DE TRAVAIL DOTÉE D'UN ENTRAÎNEMENT ÉLECTRIQUE

(30) Priorität: 21.09.2022 DE 202022105314 U
(43) Veröffentlichungstag der Anmeldung: 03.04.2024
(73) Patentinhaber: Liebherr-Werk Nenzing GmbH, 6710 Nenzing (AT)
(72) Erfinder: Schall, Paul, 6800 Feldkirch (AT)
(74) Vertreter: Laufhütte, Dieter

(56) Entgegenhaltungen:
- CN-A- 109 693 544
- US-A1- 2014 360 811
- US-A1- 2019 184 835
- US-A1- 2022 024 318
- US-A1- 2022 074 163
- US-B2- 9 362 797
- US-B2- 9 828 049

## Beschreibung

Die vorliegende Erfindung betrifft eine Arbeitsmaschine, insbesondere einen Seilbagger, gemäß dem Oberbegriff des Anspruchs 1.

Bei elektrisch angetriebenen Arbeitsmaschinen mit Raupenfahrwerk sind an den Raupenträgern typischerweise elektrische Fahrantriebe bzw. Fahrmotoren in Form von Elektromotoren angeordnet, welche die Raupenketten antreiben. Häufig besitzen derartige Arbeitsmaschinen einen Unterwagen mit einem Mittelteil, an dem die Raupenträger montiert sind, wobei ein Oberwagen drehbar auf dem Mittelteil gelagert sein kann.

Die elektrischen Fahrantriebe werden üblicherweise vom Unterwagen aus mit Strom und ggf. Kühlmittel versorgt. Die Fahrantriebe sind typischerweise an das Hochvolt-(HV)-Bordnetz der Arbeitsmaschine angeschlossen, wobei eine am bzw. im Unterwagen angeordnete Leistungselektronik die Kommunikation mit den Fahrantrieben und die Modulation von Strom und Spannung zur Versorgung der Fahrantriebe übernehmen kann. Die Stromversorgung der Fahrantriebe erfolgt über Energieversorgungsleitungen, typischerweise drei AC-Phasen-Stromkabel, die an Invertern der Leistungselektronik angeschlossen sind. Daneben gibt es häufig eine Reihe weiterer Versorgungsleitungen wie Kühlmittelleitungen, Steuerleitungen zur Steuerung der Fahrantriebe und/oder Signalleitungen zur Übertragung von beispielsweise Sensorsignalen.

Bei einigen bekannten Arbeitsmaschinen werden die Raupenträger für den Transport vom Mittelteil abgebaut. In einigen Fällen können derartige Arbeitsmaschinen die Raupenträger, die beispielsweise auf einem separaten Tieflader zur Baustelle verfahren werden, in einem Selbstmontagebetrieb im teilgerüsteten Zustand selbst an den Unterwagen heben. Sollen derartige Arbeitsmaschinen elektrisch angetrieben, d.h. die Raupenträger mit entsprechenden elektrischen Fahrantrieben versehen werden, müssen die Versorgungsleitungen der Fahrmotoren zur Demontage der Raupenträger von den Fahrantrieben getrennt werden können. Dadurch ergibt sich jedoch der potenziell gefährliche Zustand, dass offene Anschlüsse von Versorgungsleitungen vorliegen, die weiterhin mit dem HV-Bordnetz verbunden sind und daher unter Hochspannung stehen.

Vor diesem Hintergrund liegt der vorliegenden Erfindung die Aufgabe zugrunde, die Sicherheit bei der Montage und Demontage der Raupenträger bei gattungsgemäßen elektrifizierten Arbeitsmaschinen zu erhöhen und dabei den An- und Abbau der Raupenträger einfach zu gestalten. US 2022/074163 A1 offenbart Arbeitsmaschine, insbesondere Seilbagger, mit einem Unterwagen, welcher ein Mittelteil und zwei mit dem Mittelteil verbundenen Raupenträgern mit einem elektrischen Fahrantrieb umfasst, wobei mindestens eine Versorgungsleitung vom Mittelteil zum Fahrantrieb verläuft.

Erfindungsgemäß wird diese Aufgabe durch eine Arbeitsmaschine mit den Merkmalen des Anspruchs 1 gelöst. Vorteilhafte Ausführungsformen der Erfindung ergeben sich aus den Unteransprüchen und der nachfolgenden Beschreibung.

Demnach wird eine Arbeitsmaschine vorgeschlagen, welche einen Unterwagen mit einem Mittelteil und mindestens einen mit dem Mittelteil verbundenen Raupenträger umfasst. Bei der Arbeitsmaschine kann es sich beispielsweise um einen Seilbagger handeln. Der mindestens eine Raupenträger besitzt mindestens einen elektrischen Fahrantrieb, welcher insbesondere eine Raupenkette des Raupenträgers antreibt. Bei dem Fahrantrieb handelt es sich insbesondere um einen Elektromotor. Der Fahrantrieb wird über mindestens eine Versorgungsleitung vom Mittelteil der Arbeitsmaschine aus versorgt, insbesondere mit Hochspannung bzw. Strom aus einem HV-Bordnetz der Arbeitsmaschine. Die Versorgungsleitung ist dabei über einen Anschluss mit dem Fahrantrieb verbunden und kann daher, beispielsweise zur Demontage des Raupenträgers, vom Fahrantrieb getrennt werden.

Um das potenzielle Sicherheitsrisiko zu beseitigen, das von dem nach dem Abstecken offenen Ende der Versorgungsleitung ausgeht (beispielsweise für Personal bei der Montage / Demontage des Raupenträgers), ist die Arbeitsmaschine erfindungsgemäß mit einem elektrischen Interlockkreis versehen, welcher über den ersten Anschluss mit dem Fahrantrieb verbunden ist. Mit anderen Worten ist der Fahrantrieb über den ersten Anschluss in den Interlockkreis einbezogen. Wird der erste Anschluss der Versorgungsleitung getrennt, ist somit der Interlockkreis unterbrochen.

Erfindungsgemäß umfasst die Arbeitsmaschine ferner ein am Unterwagen angeordnetes Gegensteckermodul mit einem ersten Gegenanschluss zur Verbindung mit dem zuvor vom Fahrantrieb (bzw. einem fahrantriebsseitigen Anschluss) getrennten ersten Anschluss der Versorgungsleitung. Das Gegensteckermodul ist dazu ausgebildet, den durch eine Trennung vom Fahrantrieb unterbrochenen Interlockkreis durch Verbindung des ersten Anschlusses mit dem ersten Gegenanschluss stromleitend zu überbrücken, d.h. den Interlockkreislauf zu schließen.

Der Interlockkreis stellt insbesondere einen separaten geschlossenen elektrischen Kreis dar, dessen Interlockleitung durch den ersten Anschluss bzw. einen den ersten Anschluss aufweisenden Konnektor zum Fahrantrieb und wieder zurück verläuft. Eine Unterbrechung des geschlossenen Interlockkreises äußert sich in einer Änderung eines ausgelesenen Parameters des Interlockkreises, wodurch die Unterbrechung erkannt und ggf. eine entsprechende Maßnahme ergriffen werden kann.

Wird nun die Versorgungsleitung über deren ersten Anschluss vom Fahrantrieb getrennt, ist der Interlockkreis unterbrochen, was durch eine entsprechende Auswerteelektronik erkannt werden kann. In Reaktion darauf kann beispielsweise eine Energiequelle (z.B. eine Batterie) vom Bordnetz getrennt werden, sodass keine gefährliche Spannung mehr am offenen ersten Anschluss anliegt.

Da in gewissen Situationen aber auch bei demontiertem Raupenträger ein Betrieb der Arbeitsmaschine gewünscht ist, beispielsweise bei der Selbstmontage bzw. Selbstdemontage des Raupenträgers, stellt das erfindungsgemäße Gegensteckermodul eine Möglichkeit bereit, das offene Ende der Versorgungsleitung sicher zu verstauen bzw. zu "parken". Hierzu wird der offene erste Anschluss mit dem entsprechenden Gegenanschluss des Gegensteckermoduls verbunden. Dadurch geht von dem ersten Anschluss keine Gefahr mehr aus, da dieser nicht mehr offen, sondern sicher mit dem Gegenanschluss verbunden ist. Das Gegensteckermodul überbrückt nach Herstellung der Verbindung den Interlockkreis und ermöglicht dadurch einen sicheren Betrieb der Arbeitsmaschine im teilgerüsteten Zustand. Hierzu weist das Gegensteckermodul insbesondere eine entsprechende Interlockleitung auf, die den Interlockkreis brückt bzw. schließt. Die Interlockleitung des Gegensteckermoduls (d.h. der Interlockkreis unter Einbeziehung des Gegensteckermoduls) wird also nur genutzt, wenn die Versorgungsleitung(en) des elektrischen Fahrantriebs getrennt ist / sind.

Da sich das Gegensteckermodul am Unterwagen befindet, vorzugsweise am Mittelteil an einer für das Bedienpersonal gut zugänglichen Position, kann die Versorgungsleitung nach dem Abtrennen vom Fahrantrieb schnell und unkompliziert verstaut werden. Hierzu sind keine separaten Teile vorzuhalten, die verloren gehen können und eine Bedienung erschweren.

In einer möglichen Ausführungsform ist vorgesehen, dass mindestens eine Versorgungsleitung als Energieversorgungsleitung zur Energieversorgung des Fahrantriebs ausgebildet ist. Die Energieversorgungsleitung versorgt den Fahrantrieb mit Strom aus dem internen HV-Bordnetz der Arbeitsmaschine. Vorzugsweise sind drei Energieversorgungsleitungen vorgesehen, welche insbesondere als AC-Phasen-Kabel ausgebildet sind. Die mindestens eine Energieversorgungsleitung ist vorzugsweise mit mindestens einem Inverter verbunden. Dieser ist idealerweise in bzw. am Mittelteil des Unterwagens angeordnet.

**In** einer weiteren möglichen Ausführungsform ist vorgesehen, dass mindestens eine Versorgungsleitung als Signalleitung zur Übermittlung von Steuersignalen an den Fahrantrieb und/oder zur Übermittlung von Sensorsignalen ausgebildet ist. Bei besagter Steuerung kann es sich um einen Inverter oder eine separate Steuereinheit handeln. Eine solche Steuerleitung dient insbesondere der Steuerung des Fahrantriebs. Es können mehrere Steuer- und/oder Signalleitungen vorgesehen, um unterschiedliche Signale zu übertragen. Bei einer oder mehreren Signalleitungen kann es sich um ein Resolverkabel handeln.

**In** einer weiteren möglichen Ausführungsform ist vorgesehen, dass der Fahrantrieb über einen ersten Anschluss mit mindestens einer ersten Versorgungsleitung und über einen zweiten Anschluss mit mindestens einer zweiten Versorgungsleitung trennbar verbunden ist. Dabei dient vorzugsweise der erste Anschluss der Energieversorgung des Fahrantriebs (d.h. er ist mit einer oder mehreren Energieversorgungsleitungen verbunden) und der zweite Anschluss der Übertragung von Signalen, beispielsweise von Steuersignalen für die Steuerung des Fahrantriebs oder von Sensorsignalen. Es sind also parallel unterschiedliche Versorgungsleitungen mit dem Fahrantrieb über entsprechende Anschlüsse trennbar verbunden. Selbstverständlich können mehr als zwei Anschlüsse und eine entsprechende Anzahl von Gegenanschlüssen pro Fahrantrieb vorgesehen sein.

**In** einer weiteren möglichen Ausführungsform ist vorgesehen, dass das Gegensteckermodul einen ersten Gegenanschluss zur Verbindung mit dem ersten Anschluss und einen zweiten Gegenanschluss zur Verbindung mit dem zweiten Anschluss umfasst. Dadurch kann jeder nach dem Trennen vom Fahrantrieb offene Anschluss einer Versorgungsleitung mit einem entsprechenden Gegenanschluss des Gegensteckermoduls lösbar verbunden werden, um diesen sicher zu verstauen und über das Gegensteckermodul den Interlockkreis stromleitend zu überbrücken.

Vorzugsweise sind die die ersten und zweiten Anschlüsse an getrennten Konnektoren und/oder unterschiedlich ausgebildet. So können beispielsweise mehrere Energieversorgungsleitungen mit einem gemeinsamen ersten Anschluss verbunden sein. Dieser kann eine andere Form aufweisen als ein zweiter Anschluss, der mit einer oder mehreren Signalleitungen verbunden ist. Hier sind unterschiedlichste Ausgestaltungen denkbar, wobei unabhängig von der genauen Ausführung für jeden Anschluss einer Versorgungsleitung ein entsprechender Gegenanschluss am Gegensteckermodul vorgesehen ist, insbesondere in Form einer einfachen Steckverbindung.

Optional kann mindestens eine Verriegelungseinrichtung zur Fixierung der mit dem Gegensteckermodul verbundenen Anschlüsse bzw. Versorgungsleitungen vorgesehen sein, damit sich die Verbindungen nicht ungewollt lösen können.

In einer weiteren möglichen Ausführungsform ist vorgesehen, dass ein gemeinsamer Interlockkreis mit den ersten und zweiten Gegenanschlüssen verbunden und durch gleichzeitige Verbindung der ersten und zweiten Anschlüsse mit den ersten und zweiten Gegenanschlüssen stromleitend überbrückbar ist. In dieser Ausführungsform kann der Interlockkreis als nur dadurch geschlossen werden, dass beide Anschlüsse mit den entsprechenden Gegenanschlüssen verbunden sind. Ist einer der Anschlüsse nicht mit seinem Gegenanschluss verbunden, so ist der gemeinsame Interlockkreis unterbrochen. Dadurch kann sichergestellt werden, dass ein etwaiger Betrieb der Arbeitsmaschine in einem teilgerüsteten Zustand nur dann erfolgen kann, wenn alle Versorgungsleitungen sicher in Gegensteckermodul verstaut sind, d.h. dass beispielsweise beide Raupenträger abgebaut oder angebaut sind.

In einer alternativen Ausführungsform können mehrere getrennte Interlockkreise vorgesehen sein, wobei ein erster Interlockkreis mit dem ersten Gegenanschluss und ein davon getrennter, zweiter Interlockkreis mit dem zweiten Gegenanschluss verbunden ist. Dabei ist jeder Interlockkreis separat durch Verbindung des jeweiligen Anschlusses mit dem zugehörigen Gegenanschluss stromleitend überbrückbar. In dieser Ausführungsform ist jeder Versorgungsleitung ein eigener Interlockkreis zugeordnet, sodass sich unterschiedliche Verbindungs- bzw. Fehlerzustände durch entsprechende Auswertung der Interlockkreise feststellen lassen.

In einer weiteren möglichen Ausführungsform ist vorgesehen, dass der erste Anschluss und der erste Gegenanschluss Interlockkontakte aufweisen, die im angeschlossenen Zustand stromleitend miteinander verbunden sind. Falls ein zweiter Anschluss und ein zweiter Gegenanschluss vorgesehen sind, wie oben beschrieben, so weisen diese vorzugsweise ebenfalls entsprechende Interlockkontakte auf.

In einer weiteren möglichen Ausführungsform ist eine Auswerteeinheit vorgesehen, welche mit dem Interlockkreis verbunden und eingerichtet ist, eine Unterbrechung des Interlockkreises zu detektieren. Falls mehrere Interlockkreise vorgesehen sind, können diese von einer gemeinsamen Auswerteeinheit oder alternativ jeweils von einer eigenen Auswerteeinheit analysiert werden. Die Auswerteeinheit ist vorzugsweise ferner eingerichtet, bei Erkennung einer Unterbrechung des zugeordneten Interlockkreises eine Energiequelle (beispielsweise eine Batterie) von einem Bordnetz der Arbeitsmaschine zu trennen, sodass keine Spannung mehr an den offenen Anschlüssen vorliegt. Bei einem anschließenden Schließen bzw. Überbrücken des Interlockkreises kann die Auswerteeinheit dies ebenfalls erkennen und insbesondere die Energiequelle wieder mit dem Bordnetz koppeln, sodass ein Betrieb der Arbeitsmaschine möglich ist. Die Trennung bzw. Verbindung der Energiequelle kann durch die Auswerteeinheit unmittelbar oder mittelbar veranlasst werden, in letzterem Fall beispielsweise durch Kommunikation mit einer entsprechenden Steuereinheit, die das Trennen bzw. Verbinden der Energiequelle steuert.

In einer weiteren möglichen Ausführungsform ist vorgesehen, dass der erste Anschluss von außerhalb des Mittelteils und des Raupenträgers zugänglich und insbesondere im verbundenen Zustand außerhalb von Mittelteil und Raupenträger angeordnet ist. Dadurch können die Versorgungsleitungen einfach und schnell von den jeweiligen Anschlussstellen am Raupenträger und/oder Mittelteil gelöst werden, beispielsweise bei einer Demontage des Raupenträgers. Eine Verbindung gelingt ebenso reibungslos und schnell.

In einer weiteren möglichen Ausführungsform ist vorgesehen, dass ein an den ersten Anschluss grenzender Abschnitt der mindestens einen Versorgungsleitung außerhalb von Mittelteil und Raupenträger, d.h. insbesondere außerhalb des Stahlbaus des Unterwagens verläuft und insbesondere beweglich bzw. flexibel ausgebildet ist. Die mindestens eine Versorgungsleitung ist vorzugsweise derart ausgebildet, dass der erste Anschluss wahlweise mit dem ersten Gegenanschluss des Gegensteckermoduls oder mit einem am Raupenträger angeordneten, mit dem Fahrantrieb verbundenen Anschluss verbindbar ist. Dadurch lässt sich die Versorgungsleitung nach Trennung vom Fahrantrieb einfach und schnell mit dem Gegenanschluss verbinden.

In einer weiteren möglichen Ausführungsform sind mindestens zwei mit dem Mittelteil verbundene Raupenträger vorgesehen, die insbesondere auf gegenüberliegenden Seiten des Mittelteils angeordnet sind. Die Raupenträger weisen jeweils mindestens einen Fahrantrieb auf, der über mindestens eine Versorgungsleitung versorgt wird.

In einer weiteren möglichen Ausführungsform ist vorgesehen, dass das Gegensteckermodul zwei erste Gegenanschlüsse zur Verbindung mit den ersten Anschlüssen der jeweiligen Versorgungsleitungen aufweist. Es ist also ein gemeinsames Gegensteckermodul für die verschiedenen Fahrantriebe vorgesehen. Das Gegensteckermodul kann mehrere separate Interlockkreise für die jeweiligen Fahrantriebe umfassen bzw. mehrere Interlockkreisleitungen, die die separaten, den jeweiligen Fahrantrieben zugeordneten Interlockkreise getrennt voneinander überbrücken können. Dadurch kann die Arbeitsmaschine beispielsweise in einem Zustand betrieben werden, in dem ein Raupenträger montiert und dessen Fahrantrieb angeschlossen ist, der andere Raupenträger dagegen demontiert und die entsprechenden Anschlüsse noch mit dem Gegensteckermodul verbunden. Alternativ kann ein gemeinsamer Interlockkreis vorgesehen sein, sodass alle Anschlüsse der Versorgungsleitungen aller Fahrantriebe gleichzeitig mit dem Gegensteckermodul verbunden sein müssen, um den Interlockkreis zu schließen.

In einer alternativen Ausführungsform ist vorgesehen, dass am Unterwagen mindestens zwei separate Gegensteckermodule mit jeweils einem ersten Gegenanschluss zur Verbindung mit dem ersten Anschluss der jeweiligen Versorgungsleitung angeordnet sind. Es ist also für jeden Fahrantrieb ein eigenes Gegensteckermodul vorgesehen. Bevorzugt weist die Arbeitsmaschine eine entsprechende Anzahl von Interlockkreisen auf, denen jeweils ein Gegensteckermodul zugeordnet ist.

In einer weiteren möglichen Ausführungsform ist vorgesehen, dass der mindestens eine Raupenträger lösbar mit dem Mittelteil verbunden ist, wobei die Arbeitsmaschine vorzugsweise einen drehbar auf dem Unterwagen gelagerten Oberwagen umfasst und dazu ausgebildet ist, in einem Selbstmontagebetrieb ohne montierte Raupenträger mit einem am Oberwagen montierten Ausleger oder Auslegerstück Hubarbeiten durchzuführen, beispielsweise um die Raupenträger von einem Tieflader an Anschlussstellen am Mittelteil zu heben. Im Selbstmontagebetrieb ist vorzugsweise eine Energieversorgung der Arbeitsfunktion nur bei über das Gegensteckermodul geschlossenem Interlockkreis aktiviert. Ist der Interlockkreis dagegen unterbrochen, lässt sich die Arbeitsfunktion (z.B. das Betätigen eines Auslegers, einer Hubwinde etc.) nicht nutzen bzw. die Energieversorgung ist deaktiviert.

Weitere Merkmale, Einzelheiten und Vorteile der Erfindung ergeben sich aus den nachfolgend anhand der Figuren erläuterten Ausführungsbeispielen. Es zeigen:
- Fig. 1:: eine seitliche Ansicht des Unterwagens und Oberwagens der erfindungsgemäßen Arbeitsmaschine gemäß einem bevorzugten Ausführungsbeispiel;
- Fig. 2:: eine seitliche Ansicht der Arbeitsmaschine gemäß Figur 1 im Selbstmontagebetrieb mit demontierten Raupenträgern;
- Fig. 3:: eine perspektivische Ansicht des Unterwagens der Arbeitsmaschine gemäß Figur 1; und
- Fig. 4-6:: schematische Darstellungen des internen Aufbaus des Gegensteckermoduls anhand dreier Ausführungsbeispiele.

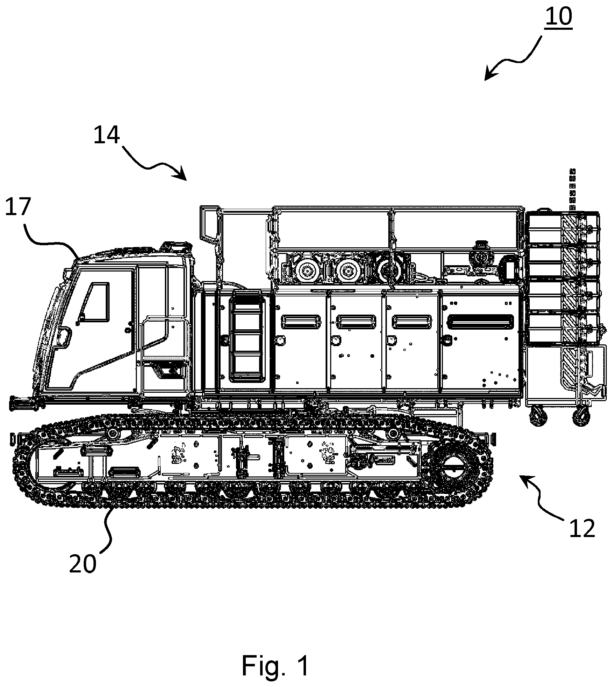

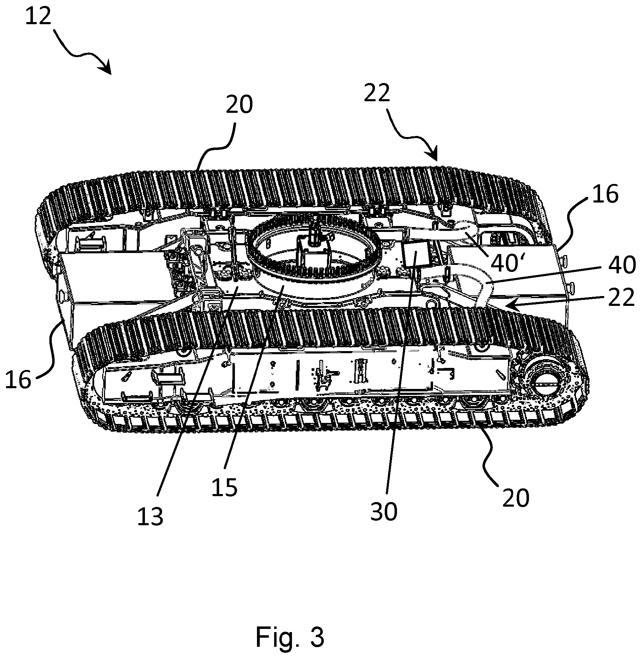

In der Figur 1 ist ein bevorzugtes Ausführungsbeispiel der erfindungsgemäßen Arbeitsmaschine 10 in einer seitlichen Ansicht dargestellt. Bei dem gezeigten Ausführungsbeispiel handelt es sich um einen Seilbagger 10 mit einem fahrbaren Unterwagen 12 und einem um eine vertikale Drehachse drehbar auf dem Unterwagen 12 gelagerten Oberwagen 14. Der Unterwagen 12 ist in der Figur 3 in einer perspektivischen Ansicht gezeigt. Der Ausleger des Seilbaggers 10 ist hier nicht dargestellt. Der Oberwagen 14 weist eine Fahrerkabine 17 auf und ist über einen Drehkranz 15, welcher in der Figur 3 zu erkennen ist, drehbar mit einem Mittelteil 13 des Unterwagens 12 verbunden.

Seitlich am Mittelteil 13 sind zwei Raupenfahrwerke 20 befestigt, sodass das Mittelteil 13 mittig zwischen den Raupenträgern 20 des Raupenfahrwerks sitzt. Die Raupenträger 20 besitzen elektrische Fahrantriebe 22, welche die Raupenketten antreiben und deren Position in der Figur 3 durch Pfeile nur angedeutet ist. Bei den Fahrantrieben 22 handelt es sich insbesondere um Elektromotoren.

Wie in der Figur 3 ferner zu erkennen ist, kann der Seilbagger 10 vorne und hinten zwischen den Raupenträgern 20 jeweils einen am Mittelteil 13 montierten Zentralballast 16 aufweisen. Dieser kann wahlweise an- oder abgebaut sein, je nach Einsatz.

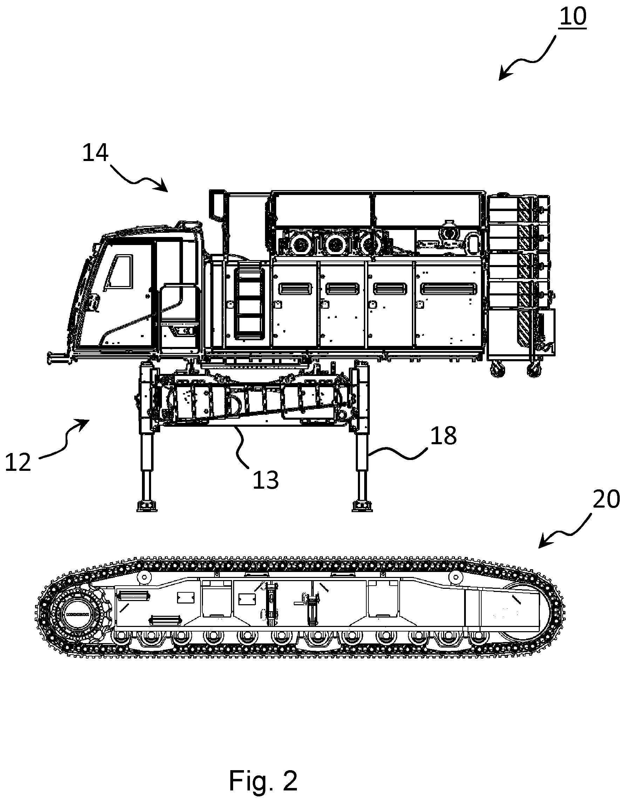

Die Figur 2 zeigt in einer seitlichen Ansicht den auf dem Mittelteil 13 montierten Oberwagen 14, wobei die Raupenträger 20 vom Mittelteil 13 demontiert sind. Die Arbeitsmaschine befindet sich in einem Selbstmontagezustand, in dem mehrere (hier vier) hydraulische Jack-Up-Zylinder 18, welche vertikal ausgerichtet und am Mittelteil 13 angeordnet sind, ausgefahren sind. Der teilgerüstete Seilbagger 10 steht auf den Jack-Up-Zylindern 18, welche als Stützfüße fungieren und das Mittelteil 13 in einer erhöhten Position halten, in der die Raupenträger 20 seitlich an das Mittelteil 13 angebaut werden können. Über einen hier nicht gezeigten Ausleger (bzw. insbesondere ein Anlenkstück des Auslegers) kann der teilgerüstete Seilbagger 10 die Raupenträger 20 selbstständig in einem Selbstmontagebetrieb heben und bewegen.

Die elektrischen Fahrantriebe 22 werden vom Mittelteil 13 aus durch ein HV-Bordnetz der Arbeitsmaschine 10 versorgt und gesteuert. Hierbei kann es sich um ein DC-Bordnetz handeln. Das Bordnetz erstreckt sich vorzugsweise vom Mittelteil 13 über Schleifringkontakte in den Oberwagen 14, wo ebenfalls bestimmte elektrische Antriebskomponenten bzw. Verbraucher versorgt werden. Bevorzugt werden also elektrische Antriebskomponenten und Verbraucher im Oberwagen 14 und im Unterwagen 12, inkl. der elektrischen Fahrantriebe 22, von demselben Bordnetz versorgt.

Zur elektrischen Versorgung der Fahrantriebe 22 können pro Fahrantrieb 22 drei Energieversorgungsleitungen in Form von AC-Phasen-Kabeln vorgesehen sein, die den jeweiligen Fahrantrieb 22 mit Strom aus dem HV-Bordnetz versorgen. Die Energieversorgungsleitungen 40 verlaufen zwischen den Fahrantrieben 22 und einem oder mehreren Invertern (nicht dargestellt), die bevorzugt im Mittelteil 13 angeordnet sind. Die Inverter die Kommunikation mit den Fahrantrieben 22 und die Modulation von Strom und Spannung zur Versorgung der Fahrantriebe 22 übernehmen.

Darüber hinaus kann die Steuerung der Fahrantriebe 22 über eine oder mehrere Steuerleitungen erfolgen. Die Kommunikation mit den Fahrantrieben 22 kann ebenfalls über die Inverter oder ein separates Steuerungsmodul vorgenommen werden. Zusätzlich können eine oder mehrere Signalleitungen vorgesehen sein, beispielsweise um Sensorsignale von den Fahrantrieben 22 an eine Steuerung (oder die Inverter) im Mittelteil 13 zu übermitteln.

Die elektrischen Leitungen zur Versorgung und Steuerung der Fahrantriebe 22 sowie ggf. zur Signalübertragung werden vorliegend zusammengefasst als Versorgungsleitungen 40 bezeichnet. Vorzugsweise sind die Versorgungsleitungen 40 nicht im Stahlbau des Unterwagens 12 zu den Fahrantrieben 22 geführt, sondern verlaufen außerhalb von Mittelteil 13 und Raupenträgern 20, wie dies in Figur 3 angedeutet ist. Die Versorgungsleitungen 40 sind vorzugsweise beweglich bzw. flexibel ausgeführt.

Die Versorgungsleitungen 40 sind über Anschlüsse 41, 42 trennbar mit den Fahrantrieben 22 verbunden. Hierzu sind insbesondere entsprechende Konnektoren in Form von Buchsen und Steckern vorgesehen, die zur Bildung von stromleitenden Verbindungen miteinander lösbar verbunden werden. Die Anschlüsse 41, 42 sind insbesondere außerhalb der Raupenträger 20 angeordnet, sodass sie von außen einfach zugänglich sind und ohne großen Aufwand abgesteckt (und verbunden) werden können.

Optional können die Fahrantriebe 22 gekühlt sein. Hierzu kann jeder Fahrantrieb 22 an einen Kühlkreis angeschlossen sein, wobei zwischen dem Mittelteil 13 und den Fahrantrieben 22 jeweils insbesondere zwei Kühlmittelleitungen verlaufen, die das Kühlmittel an die Fahrantriebe 22 liefern und das erwärmte Kühlmittel wieder zurück zum Mittelteil 13 befördern. Die Kühlmittelleitungen verlaufen vorzugsweise parallel zu den Versorgungsleitungen 40. Auch die Kühlmittelleitungen sind vorzugsweise über entsprechende Anschlüsse mit den Fahrantrieben trennbar verbunden.

Im Selbstmontagebetrieb der Arbeitsmaschine 10, wie beispielsweise in der Figur 2 dargestellt, müssen die Arbeitsfunktionen der teilgerüsteten Arbeitsmaschine 10 funktionsfähig sein, d.h. die entsprechenden Antriebe und Verbraucher mit Strom bzw. Spannung aus dem Bordnetz versorgt werden. In diesem Zustand sind jedoch die Raupenträger 20 vom Mittelteil 13 abgebaut, wobei die Versorgungsleitungen 40 von den entsprechenden Anschlüssen am Raupenträger 20 getrennt wurden und nun offen vorliegen. Durch solche offenen Anschlüsse geht ein potenzielles Gefährdungsrisiko für Personal aus, wenn dort Hochspannung aus dem Bordnetz anliegt.

Um diese Gefahr zu beseitigen, ist die erfindungsgemäße Arbeitsmaschine 10 mit einem Hochvolt-Interlockkreis (kurz HVIL für engl. "High Voltage Interlock Loop"; im Folgenden als Interlockkreis 50 bezeichnet) ausgestattet. Der Interlockkreis 50 dient der Überwachung der Steckverbindungen im Hochvoltstromkreis der Arbeitsmaschine 10 und soll eine Gefährdung durch unbeabsichtigtes oder unsachgemäßes Trennen einer HV-Steckverbindung (d.h. der Anschlüsse 41, 42 der Versorgungsleitungen 40) vermeiden. Der Interlockkreis 50 ist hierzu als geschlossener elektrischer Kreis aufgebaut, der sich vom Bordnetz zu den relevanten elektrischen Antrieben und Verbrauchern durch die jeweiligen Steckverbindungen bzw. Anschlüsse 41, 42 hindurch erstreckt. Hierzu weisen die Anschlüsse 41, 42 insbesondere jeweils spezielle Interlockkontakte auf, die im verbundenen Zustand der Anschlüsse 41, 42 stromleitend miteinander verbunden sind.

Bei den Anschlüssen 41 und 42 muss es sich nicht zwingend um separate Anschlüsse handeln. Im einfachsten Fall können die Anschlüsse 41 und 42 auch nur unterschiedliche Pins, beispielsweise "HVIL-ein" und "HVIL-aus", darstellen.

Sind alle Steckverbindungen bzw. Anschlüsse 41, 42 verbunden, ist der Interlocckreis 50 geschlossen. Wird der Interlockkreis 50 unterbrochen, beispielsweise durch das Trennen eines Anschlusses 41, 42 einer Versorgungsleitung 40, so wird dies durch eine Auswerteeinheit (nicht dargestellt) der Arbeitsmaschine 10 erkannt und daraufhin beispielsweise eine Energiequelle (z.B. eine Batterie) vom Bordnetz getrennt. Somit wird das System spannungsfrei geschalten und es liegt an dem offenen Anschluss 41, 42 keine Spannung mehr an.

Im hier gezeigten Ausführungsbeispiel können die Energieversorgungsleitungen der rechten und linken Fahrantriebe 22 über erste Anschlüsse 41, 41' und die Signalleitungen der rechten und linken Fahrantriebe 22 über zweite Anschlüsse 42, 42' angebunden sein. Die drei Energieversorgungsleitungen können über einen gemeinsamen Konnektor verfügen. Prinzipiell sind auch einzelne Konnektoren denkbar.

Im Selbstmontagebetrieb der Arbeitsmaschine 10 sind die Raupenträger 20 abgebaut und die ersten und zweiten Anschlüsse 41, 42 der Versorgungsleitungen 40 liegen offen. Dadurch ist der Interlockkreis 50 unterbrochen, wodurch für den Selbstmontagebetrieb keine Energieversorgung zur Verfügung stünde.

Hierfür ist erfindungsgemäß ein Gegensteckermodul 30 vorgesehen, welches in diesem Ausführungsbeispiel am Mittelteil 13 im Bereich der mittelteilseitigen Anschlussstellen der Versorgungsleitungen 40 angeordnet ist, vgl. Fig. 3. Das Gegensteckermodul 30 weist zu den Anschlüssen 41, 42 der Versorgungsleitungen 40 passende Schnittstellen auf, in diesem Ausführungsbeispiel in Form eines ersten Gegenanschlusses 31 zur Verbindung mit dem ersten Anschluss 41 und eines zweiten Gegenanschlusses 32 zur Verbindung mit dem zweiten Anschluss 42 der Versorgungsleitungen 40. Die offenen Enden der Versorgungsleitungen 40 werden einfach mit den Gegenanschlüssen 31, 32 des Gegensteckermoduls 30 verbunden und dort für den teilmontierten Betrieb "geparkt".

Das Gegensteckermodul 30 ist so ausgebildet, dass die Interlockkontakte der Anschlüsse 41, 42 stromleitend überbrückt werden und der Interlockkreis 50 dadurch geschlossen wird. Dadurch steht im teilmontierten Zustand der Arbeitsmaschine 10 die Energieversorgung des Bordnetzes zur Verfügung, beispielsweise für die Selbstmontage oder -demontage der Raupenträger 20.

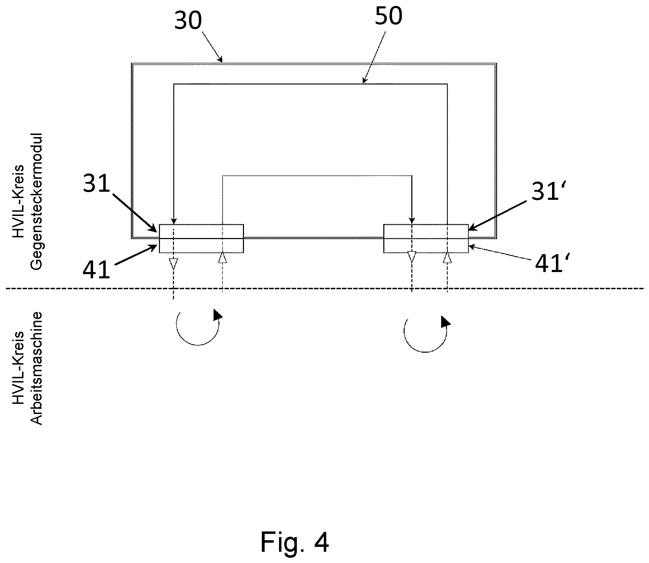

Die Figuren 4-6 zeigen drei unterschiedliche Ausführungsbeispiele für den prinzipiellen Aufbau des Gegensteckermoduls 30. Bei dem in der Figur 4 gezeigten ersten Ausführungsbeispiel umfasst das Gegensteckermodul 30 einen einzigen Interlocckreis 50 (genauer gesagt Interlockleitungen zu einem einzigen Interlockkreis 50 der Arbeitsmaschine 10) und zwei erste Gegenanschlüsse 31, 31' für die ersten Anschlüsse 41, 41' der rechten und linken Raupenträger 20. Die gebogenen Pfeile deuten an, dass die Interlockleitungen des Interlockkreises 50 durch die Anschlüsse 41, 41' und Gegenanschlüsse 31, 31' hindurch in das Gegensteckermodul 30 und wieder aus diesem hinaus und auch außerhalb als geschlossener Kreis verlaufen.

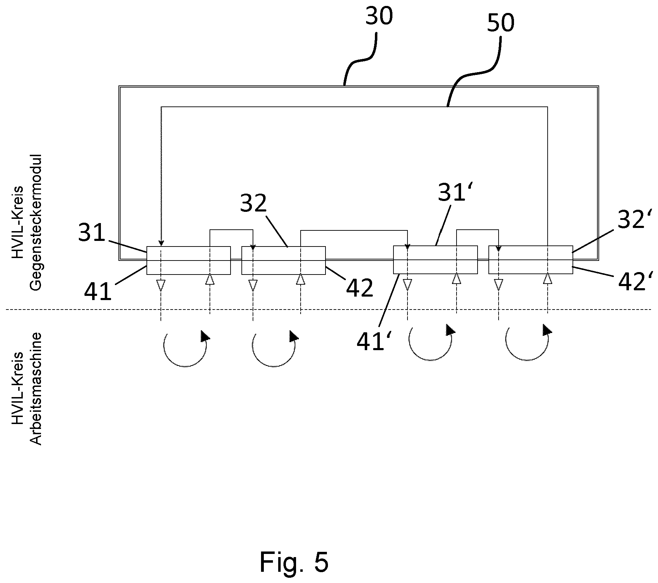

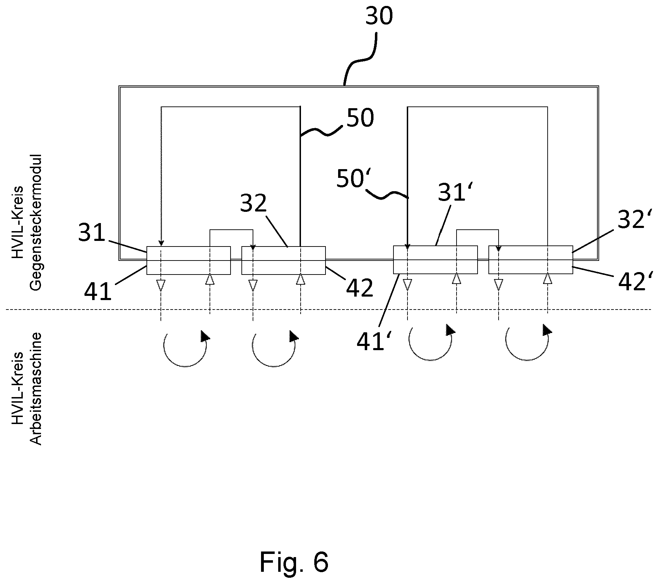

Falls weitere Versorgungsleitungen 40 für Signalübertragungen vorgesehen sind (z.B. Steuerleitungen), können diese optional an einem separaten Gegensteckermodul anschließbar sein, welches Interlockleitungen für denselben oder einen separaten Interlockkreis 50, 50' umfasst. Alternativ kann ein gemeinsames Gegensteckermodul 30 sowohl erste Gegenanschlüsse 31, 31' für die ersten Anschlüsse 41, 41' als auch zweite Gegenanschlüsse 32, 32' für die zweiten Anschlüsse 42, 42' der Versorgungsleitungen 40 umfassen. Diese Möglichkeit ist in den Figuren 5 und 6 gezeigt, wobei bei dem zweiten Ausführungsbeispiel gemäß Fig. 5 ein einziger, gemeinsamer Interlockkreis 50 vorgesehen ist, der durch sämtliche Anschlüsse 41, 41', 42, 42' und Gegenanschlüsse 31, 31', 32, 32' verläuft. In diesem Fall ist der Interlockkreis 50 nur dann geschlossen und die Arbeitsmaschine 10 somit einsatzbereit, wenn wirklich alle Versorgungsleitungen 40 der Fahrantriebe 22 über deren erste und zweite Anschlüsse 41, 41', 42, 42' am Gegensteckermodul 30 eingesteckt sind.

Alternativ können für die jeweiligen Fahrantriebe 22 (also insbesondere für den rechten und den linken Fahrantrieb 22) separate Interlockkreise 50, 50' vorgesehen sein, was in der Figur 6 anhand eines dritten Ausführungsbeispiels gezeigt ist. Hierdurch ist die Arbeitsmaschine 10 bereits dann einsatzbereit, wenn einer der Raupenträger 20 am Mittelteil 13 montiert ist und die entsprechenden Versorgungsleitungen 40 angeschlossen sind, während der andere Raupenträger 20 demontiert ist und die zugeordneten Versorgungsleitungen 40' mit dem Gegensteckermodul 30 verbunden sind. Auch hierbei könnten anstelle eines einzigen Gegensteckermoduls 30 wieder mehrere separate Gegensteckermodule für die jeweiligen Interlockkreise 50, 50' oder für die jeweiligen Anschlusstypen 41, 42 vorgesehen sein.

Die ersten und zweiten Anschlüsse 41, 42 bzw. die entsprechenden Konnektoren sind vorzugsweise unterschiedlich ausgebildet, können jedoch auch identisch aufgebaut sein. Der erste Anschluss 41, 41' kann eine oder mehrere Steckerschnittstellen (bzw. Buchsen) für eine oder mehrere Energieversorgungsleitungen, insbesondere für drei AC-Phasen-Kabel umfassen. Der zweite Anschluss 42, 42' kann eine oder mehrere Steckerschnittstellen (bzw. Buchsen) für eine oder mehrere Signalleitungen umfassen.

Durch eine bewegliche Ausgestaltung der Versorgungsleitungen 40 können diese für die Demontage der Raupenträger 20 einfach von diesem abgesteckt und am Gegensteckermodul 30 eingesteckt werden. Während des Umsteckens ist die Energieversorgung des Bordnetzes deaktiviert, sodass ein einfacher, schneller und sicherer Montage- und Demontagevorgang möglich ist.

Zusammengefasst ergeben sich durch die erfindungsgemäße Lösung mit Interlocckreis 50 und Gegensteckermodul 30 folgende Vorteile:
- mit dem Interlockkreis-überwachten Gegensteckermodul 30 für elektrische Versorgungs- und Signalleitungen (kurz: Versorgungsleitungen 40) kann die Arbeitsmaschine 10 auch in einer Teilkonfiguration in Betrieb genommen werden.
- Die spannungsführenden Leitungsenden bzw. Anschlüsse 41, 42 der Versorgungsleitungen 40 werden berührungssicher geparkt und vor Fehlbedienung geschützt.
- Im Fall einer Fehlbedienung wird das Bordnetz unmittelbar von seiner Energiequelle getrennt.
- Nur durch das Schließen des Interlockkreises 50, 50' der Arbeitsmaschine 10 kann ein Selbstmontagebetrieb der Raupenträger 20 realisiert werden.

### Bezugszeichenliste:

- 10: Arbeitsmaschine
- 12: Unterwagen
- 13: Mittelteil
- 14: Oberwagen
- 15: Drehkranz
- 16: Zentralballast
- 17: Fahrerkabine
- 18: Jack-Up-Zylinder
- 20: Raupenträger
- 22: Fahrantrieb
- 30: Gegensteckermodul
- 31: Erster Gegenanschluss (linker Raupenträger)
- 31': Erster Gegenanschluss (rechter Raupenträger)
- 32: Zweiter Gegenanschluss (linker Raupenträger)
- 32': Zweiter Gegenanschluss (rechter Raupenträger)
- 40: Versorgungsleitung (linker Raupenträger)
- 40': Versorgungsleitung (rechter Raupenträger)
- 41: Erster Anschluss (linker Raupenträger)
- 41': Erster Anschluss (rechter Raupenträger)
- 42: Zweiter Anschluss (linker Raupenträger)
- 42': Zweiter Anschluss (rechter Raupenträger)
- 50: Interlockkreis
- 50': Interlockkreis

## Patentansprüche

1. Arbeitsmaschine (10), insbesondere Seilbagger, mit einem Unterwagen (12), welcher ein Mittelteil (13) und mindestens einen mit dem Mittelteil (13) verbundenen Raupenträger (20) mit mindestens einem elektrischen Fahrantrieb (22) umfasst, wobei mindestens eine Versorgungsleitung (40) vom Mittelteil (13) zum Fahrantrieb (22) verläuft;
**dadurch gekennzeichnet, dass** die mindestens eine Versorgungsleitung (40) mit dem Fahrantrieb (22) über einen ersten Anschluss (41) trennbar verbunden ist,
die Arbeitsmaschine (10) weiterhin **gekennzeichnet, durch** einen elektrischen Interlockkreis (50), der über den ersten Anschluss (41) mit dem Fahrantrieb (22) verbunden ist, und ein am Unterwagen (12) angeordnetes Gegensteckermodul (30) mit einem ersten Gegenanschluss (31) zur Verbindung mit dem ersten Anschluss (41) der Versorgungsleitung (40), welches ausgebildet ist, den durch eine Trennung vom Fahrantrieb (22) unterbrochenen Interlockkreis (50) durch Verbindung des ersten Anschluss (41) mit dem ersten Gegenanschluss (31) stromleitend zu überbrücken.

2. Arbeitsmaschine (10) nach Anspruch 1, wobei mindestens eine Versorgungsleitung (40) als Energieversorgungsleitung zur Energieversorgung des Fahrantriebs (22) ausgebildet ist, wobei vorzugsweise drei Energieversorgungsleitungen vorgesehen sind, welche insbesondere als AC-Phasen-Kabel ausgebildet sind.

3. Arbeitsmaschine (10) nach Anspruch 1 oder 2, wobei mindestens eine Versorgungsleitung (40) als Signalleitung zur Übermittlung von Steuersignalen an den Fahrantrieb (22) und/oder zur Übermittlung von Sensorsignalen an eine Steuerung ausgebildet ist.

4. Arbeitsmaschine (10) nach einem der vorhergehenden Ansprüche, wobei der Fahrantrieb (22) über einen ersten Anschluss (41) mit mindestens einer ersten Versorgungsleitung (40) und über einen zweiten Anschluss (42) mit mindestens einer zweiten Versorgungsleitung (40) trennbar verbunden ist, wobei vorzugsweise der erste Anschluss (41) der Energieversorgung des Fahrantriebs (22) und der zweite Anschluss (42) der Übertragung von Signalen für den Fahrantrieb (22) dient.

5. Arbeitsmaschine (10) nach dem vorhergehenden Anspruch, wobei das Gegensteckermodul (30) einen ersten Gegenanschluss (31) zur Verbindung mit dem ersten Anschluss (41) und einen zweiten Gegenanschluss (32) zur Verbindung mit dem zweiten Anschluss (42) umfasst, wobei die ersten und zweiten Anschlüsse (41, 42) vorzugsweise als getrennte Konnektoren und/oder unterschiedlich ausgebildet sind.

6. Arbeitsmaschine (10) nach Anspruch 5, wobei ein gemeinsamer Interlockkreis (50) mit den ersten und zweiten Gegenanschlüssen (31, 32) verbunden und durch gleichzeitige Verbindung der ersten und zweiten Anschlüsse (41, 42) mit den ersten und zweiten Gegenanschlüssen (31, 32) stromleitend überbrückbar ist.

7. Arbeitsmaschine (10) nach Anspruch 5, wobei ein erster Interlockkreis (50) mit dem ersten Gegenanschluss (31) und ein davon getrennter, zweiter Interlocckreis (50) mit dem zweiten Gegenanschluss (32) verbunden und jeder Interlockkreis (50) separat durch Verbindung des jeweiligen Anschlusses (41, 42) mit dem zugehörigen Gegenanschluss (31, 32) stromleitend überbrückbar ist.

8. Arbeitsmaschine (10) nach einem der vorhergehenden Ansprüche, wobei der erste Anschluss (41) und der erste Gegenanschluss (31) Interlockkontakte aufweisen, welche im angeschlossenen Zustand stromleitend miteinander verbunden sind.

9. Arbeitsmaschine (10) nach einem der vorhergehenden Ansprüche, ferner umfassend einen Bordnetz gekoppelt mit einer Energiequelle und eine Auswerteeinheit, welche mit dem Interlockkreis (50) verbunden und eingerichtet ist, eine Unterbrechung des Interlockkreises (50) zu detektieren, wobei die Auswerteeinheit vorzugsweise ferner eingerichtet ist, bei Erkennung einer Unterbrechung des Interlockkreises (50) die Energiequelle vom Bordnetz der Arbeitsmaschine (10) zu trennen.

10. Arbeitsmaschine (10) nach einem der vorhergehenden Ansprüche, wobei der erste Anschluss (41) von außerhalb des Mittelteils (13) und des Raupenträgers (20) zugänglich und insbesondere im verbundenen Zustand außerhalb von Mittelteil (13) und Raupenträger (20) angeordnet ist.

11. Arbeitsmaschine (10) nach dem vorhergehenden Anspruch, wobei ein an den ersten Anschluss (41) grenzender Abschnitt der mindestens einen Versorgungsleitung (40) außerhalb von Mittelteil (13) und Raupenträger (20) verläuft und insbesondere beweglich ausgebildet ist, wobei die Versorgungsleitung (40) vorzugsweise derart ausgebildet ist, dass der erste Anschluss (41) wahlweise mit dem ersten Gegenanschluss (31) des Gegensteckermoduls (30) oder mit einem am Raupenträger (22) angeordneten, mit dem Fahrantrieb (22) verbundenen Anschluss verbindbar ist.

12. Arbeitsmaschine (10) nach einem der vorhergehenden Ansprüche, umfassend mindestens zwei mit dem Mittelteil (13) verbundene Raupenträger (20), welche jeweils mindestens einen Fahrantrieb (22) mit je mindestens einer Versorgungsleitung (40, 40') aufweisen.

13. Arbeitsmaschine (10) nach Anspruch 12, wobei das Gegensteckermodul (30) zwei erste Gegenanschlüsse (31, 31') zur Verbindung mit den ersten Anschlüssen (41, 41') der jeweiligen Versorgungsleitungen (40, 40') aufweist.

14. Arbeitsmaschine (10) nach Anspruch 12, wobei am Unterwagen (12) mindestens zwei Gegensteckermodule (30) mit jeweils einem ersten Gegenanschluss (31) zur Verbindung mit dem ersten Anschluss (41, 41') der jeweiligen Versorgungsleitung (40, 40') angeordnet sind.

15. Arbeitsmaschine (10) nach einem der vorhergehenden Ansprüche, wobei der mindestens eine Raupenträger (20) lösbar mit dem Mittelteil (13) verbunden ist, wobei die Arbeitsmaschine (10) vorzugsweise einen drehbar auf dem Unterwagen (12) gelagerten Oberwagen (14) umfasst und dazu ausgebildet ist, in einem Selbstmontagebetrieb ohne montierte Raupenträger (20) mit einem am Oberwagen (14) montierten Ausleger oder Auslegerstück Hubarbeiten durchzuführen, wobei im Selbstmontagebetrieb eine Energieversorgung der Arbeitsfunktion insbesondere nur bei über das Gegensteckermodul (30) geschlossenem Interlockkreis (50) aktiviert ist.

## Claims

1. Work machine (10), in particular cable excavator, having an undercarriage (12) which comprises a middle part (13) and at least one crawler carrier (20) which is connected to the middle part (13) and comprises at least one electric traction drive (22), wherein at least one supply line (40) extends from the middle part (13) to the traction drive (22);
**characterized in that** the at least one supply line (40) is connected to the traction drive (22) in a disconnectable manner via a first connection (41), the work machine (10) being further **characterized by** an electrical interlock loop (50) which is connected to the traction drive (22) via the first connection (41), and a mating plug connector module (30), which is arranged on the undercarriage (12) and has a first mating connection (31) for connecting to the first connection (41) of the supply line (40) and is configured to bridge the interlock loop (50), which is interrupted by a disconnection from the traction drive (22), in a current-conducting manner by connecting the first connection (41) to the first mating connection (31).

2. Work machine (10) according to claim 1, wherein at least one supply line (40) is configured as an energy supply line for supplying energy to the traction drive (22), wherein preferably three energy supply lines are provided, which are configured in particular as AC phase cables.

3. Work machine (10) according to claim 1 or 2, wherein at least one supply line (40) is configured as a signal line for transmitting control signals to the traction drive (22) and/or for transmitting sensor signals to a controller.

4. Work machine (10) according to any one of the preceding claims, wherein the traction drive (22) is connected to at least one first supply line (40) via a first connection (41) and to at least one second supply line (40) via a second connection (42) in a disconnectable manner, wherein preferably the first connection (41) serves to supply energy to the traction drive (22) and the second connection (42) serves to transmit signals for the traction drive (22).

5. Work machine (10) according to the preceding claim, wherein the mating plug connector module (30) comprises a first mating connection (31) for connecting to the first connection (41) and a second mating connection (32) for connecting to the second connection (42), wherein the first and second connections (41, 42) preferably configured as separate connectors and/or differently.

6. Work machine (10) according to claim 5, wherein a common interlock loop (50) is connected to the first and second mating connections (31, 32) and can be bridged in a current conducting-manner by simultaneously connecting the first and second connections (41, 42) to the first and second mating connections (31, 32).

7. Work machine (10) according to claim 5, wherein a first interlock loop (50) is connected to the first mating connection (31) and a second interlock loop (50), which is separate therefrom, is connected to the second mating connection (32), and each interlock loop (50) can be bridged separately in a current-conducting manner by connecting the respective connection (41, 42) to the associated mating connection (31, 32).

8. Work machine (10) according to any one of the preceding claims, wherein the first connection (41) and the first mating connection (31) comprise interlock contacts which in the connected state are connected to one another in a current-conducting manner.

9. Work machine (10) according to any one of the preceding claims, further comprising an on-board power supply system coupled to an energy source, and an evaluation unit, which is connected to the interlock loop (50) and is configured to detect an interruption of the interlock loop (50), wherein the evaluation unit is preferably further configured to disconnect an energy source from an on-board power supply system of the work machine (10) when an interruption of the interlock loop (50) is sensed.

10. Work machine (10) according to any one of the preceding claims, wherein the first connection (41) is accessible from outside the middle part (13) and the crawler carrier (20) and, in particular in the connected state, is arranged outside the middle part (13) and the crawler carrier (20).

11. Work machine (10) according to the preceding claim, wherein a portion of the at least one supply line (40) adjoining the first connection (41) runs outside the middle part (13) and crawler carrier (20) and, in particular, is configured to be movable, wherein the supply line (40) is preferably configured in such a way that the first connection (41) can be connected selectively to the first mating connection (31) of the mating plug connector module (30) or to a connection arranged on the crawler carrier (20) and connected to the traction drive (22).

12. Work machine (10) according to any one of the preceding claims, comprising at least two crawler carriers (20) connected to the middle part (13), each comprising at least one traction drive (22) with in each case at least one supply line (40, 40').

13. Work machine (10) according to claim 12, wherein the mating plug connector module (30) comprises two first mating connections (31, 31') for connecting to the first connections (41, 41') of the respective supply lines (40, 40').

14. Work machine (10) according to claim 12, wherein at least two mating plug connector modules (30), each having a first mating connection (31) for connecting to the first connection (41, 41') of the respective supply line (40, 40'), are arranged on the undercarriage (12).

15. Work machine (10) according to any one of the preceding claims, wherein the at least one crawler carrier (20) is detachably connected to the middle part (13), wherein the work machine (10) preferably comprises a superstructure (14) rotatably mounted on the undercarriage (12) and is configured to perform lifting operations in a self-assembly mode without mounted crawler carriers (20) with a boom or boom section mounted on the superstructure (14), wherein in the self-assembly mode an energy supply of the working function is activated in particular only with the interlock loop (50) closed via the mating plug connector module (30).

## Revendications

1. Machine de travail (10), notamment excavatrice à câble, avec un châssis inférieur (12), qui comprend une partie centrale (13) et au moins un support à chenilles (20) relié à la partie centrale (13) avec au moins un entraînement de déplacement électrique (22), au moins une ligne d'alimentation (40) s'étendant de la partie centrale (13) à l'entraînement de déplacement (22) ;
**caractérisée en ce que** l'au moins une ligne d'alimentation (40) est reliée de manière séparable à l'entraînement de déplacement (22) par l'intermédiaire d'un premier raccord (41), la machine de travail (10) étant en outre **caractérisée par** un circuit d'interverrouillage électrique (50) qui est relié à l'entraînement de déplacement (22) par l'intermédiaire du premier raccord (41), et un module de connecteur opposé (30) agencé sur le châssis inférieur (12) avec un premier raccord opposé (31) pour la liaison avec le premier raccord (41) de la ligne d'alimentation (40), lequel est réalisé pour ponter de manière électroconductrice le circuit d'interverrouillage (50) interrompu par une séparation de l'entraînement de déplacement (22) par liaison du premier raccord (41) au premier raccord opposé (31).

2. Machine de travail (10) selon la revendication 1, dans laquelle au moins une ligne d'alimentation (40) est réalisée sous forme de ligne d'alimentation en énergie pour l'alimentation en énergie de l'entraînement de déplacement (22), trois lignes d'alimentation en énergie étant de préférence prévues, lesquelles sont notamment réalisées sous forme de câbles de phase AC.

3. Machine de travail (10) selon la revendication 1 ou 2, dans laquelle au moins une ligne d'alimentation (40) est réalisée sous forme de ligne de signalisation pour la transmission de signaux de commande à l'entraînement de déplacement (22) et/ou pour la transmission de signaux de capteur à une commande.

4. Machine de travail (10) selon l'une quelconque des revendications précédentes, dans laquelle l'entraînement de déplacement (22) est relié de manière séparable par l'intermédiaire d'un premier raccord (41) à au moins une première ligne d'alimentation (40) et par l'intermédiaire d'un deuxième raccord (42) à au moins une deuxième ligne d'alimentation (40), le premier raccord (41) servant de préférence à l'alimentation en énergie de l'entraînement de déplacement (22) et le deuxième raccord (42) à la transmission de signaux pour l'entraînement de déplacement (22).

5. Machine de travail (10) selon la revendication précédente, dans laquelle le module de connecteur opposé (30) comprend un premier raccord opposé (31) pour la liaison avec le premier raccord (41) et un deuxième raccord opposé (32) pour la liaison avec le deuxième raccord (42), les premier et deuxième raccords (41, 42) étant de préférence réalisés sous forme de de connecteurs séparés et/ou différents.

6. Machine de travail (10) selon la revendication 5, dans laquelle un circuit d'interverrouillage commun (50) est relié aux premier et deuxième raccords opposés (31, 32) et peut être ponté de manière électroconductrice par liaison simultanée des première et deuxième raccords (41, 42) aux premier et deuxième raccords opposés (31, 32).

7. Machine de travail (10) selon la revendication 5, dans laquelle un premier circuit d'interverrouillage (50) est relié au premier raccord opposé (31) et un deuxième circuit d'interverrouillage (50), séparé du premier, est relié au deuxième raccord opposé (32), et chaque circuit d'interverrouillage (50) peut être ponté séparément de manière électroconductrice par liaison du raccord respectif (41, 42) au raccord opposé correspondant (31, 32).

8. Machine de travail (10) selon l'une quelconque des revendications précédentes, dans laquelle le premier raccord (41) et le premier raccord opposé (31) présentent des contacts d'interverrouillage qui, à l'état raccordé, sont reliés entre eux de manière électroconductrice.

9. Machine de travail (10) selon l'une quelconque des revendications précédentes, comprenant en outre un réseau de bord couplé à une source d'énergie et une unité d'évaluation qui est reliée au circuit d'interverrouillage (50) et qui est adaptée pour détecter une interruption du circuit d'interverrouillage (50), l'unité d'évaluation étant de préférence adaptée en outre pour séparer la source d'énergie du réseau de bord de la machine de travail (10) en cas de détection d'une interruption du circuit d'interverrouillage (50).

10. Machine de travail (10) selon l'une quelconque des revendications précédentes, dans laquelle le premier raccord (41) est accessible depuis l'extérieur de la partie centrale (13) et du support à chenilles (20) et est notamment agencé à l'extérieur de la partie centrale (13) et du support à chenilles (20) à l'état relié.

11. Machine de travail (10) selon la revendication précédente, dans laquelle une section de l'au moins une ligne d'alimentation (40) adjacente au premier raccord (41) s'étend à l'extérieur de la partie centrale (13) et du support à chenille (20) et est notamment réalisée sous forme mobile, la ligne d'alimentation (40) étant de préférence réalisée de telle sorte que le premier raccord (41) peut être relié au choix au premier raccord opposé (31) du module de connecteur opposé (30) ou à un raccord agencé sur le support à chenille (22), relié à l'entraînement de déplacement (22).

12. Machine de travail (10) selon l'une quelconque des revendications précédentes, comprenant au moins deux supports à chenilles (20) reliés à la partie centrale (13), lesquels présentent chacun au moins un entraînement de déplacement (22) avec chacun au moins une ligne d'alimentation (40, 40').

13. Machine de travail (10) selon la revendication 12, dans laquelle le module de connecteur opposé (30) présente deux premiers raccords opposés (31, 31') pour la liaison avec les premiers raccords (41, 41') des lignes d'alimentation respectives (40, 40').

14. Machine de travail (10) selon la revendication 12, dans laquelle au moins deux modules de connecteurs opposés (30) sont agencés sur le châssis inférieur (12), chacun avec un premier raccord opposé (31) pour la liaison avec le premier raccord (41, 41') de la ligne d'alimentation respective (40, 40').

15. Machine de travail (10) selon l'une quelconque des revendications précédentes, dans laquelle l'au moins un support à chenille (20) est relié de manière amovible à la partie centrale (13), la machine de travail (10) comprenant de préférence un châssis supérieur (14) monté de manière rotative sur le châssis inférieur (12) et étant réalisée pour effectuer des travaux de levage dans un mode d'autoassemblage sans support à chenille (20) monté, avec une flèche ou un tronçon de flèche monté sur le châssis supérieur (14), une alimentation en énergie de la fonction de travail n'étant activée dans le mode d'autoassemblage notamment que lorsque le circuit d'interverrouillage (50) est fermé par l'intermédiaire du module de connecteur opposé (30).
